# EUROPÄISCHE PATENTANMELDUNG

(11) **EP 2 405 222 A2**
(43) Veröffentlichungstag der Anmeldung: **11.01.2012**
(21) Anmeldenummer: 11162001.9
(22) Anmeldetag: 12.04.2011
(51) Int. Cl.: F28D 7/10, F28F 1/16, F02M 25/07

(54) **Wärmetauschervorrichtung und ein Verfahren zur Herstellung einer Wärmetauschervorrichtung**

(30) Priorität: 14.06.2010 DE 102010023682
(71) Anmelder: Pierburg GmbH, 41460 Neuss (DE)
(72) Erfinder: Thomer, Dr., Oliver, 47877, Willich (DE)
(74) Vertreter: Ter Smitten, Hans

(57) **Zusammenfassung**

Wärmetauschervorrichtung (1) bestehend aus einem Außengehäuse (2) und einem Innengehäuse (3) mit mehreren Gehäuseteilen (4,5), welche derart zusammengesetzt sind, dass ein von einem zu kühlenden Fluid durchströmter Fluidkanal (6) im Innengehäuse (3) und ein von einem Kühlfluid durchströmter Kühlkanal zwischen dem Innengehäuse (3) und dem Außengehäuse (2) gebildet sind, wobei mindestens eine von einer Kühlkanalfläche (5) aus sich in den Fluidkanal (6) erstreckende Wärmeleitrippe (7) vorgesehen ist, wobei die Kühlkanalfläche (5) mit der mindestens einen Wärmeleitrippe (7) einstückig ausgeführt ist, wobei die mindestens eine Wärmeleitrippe (7) einen Hohlkörper bildet.

## Beschreibung

Die Erfindung betrifft eine Wärmetauschervorrichtung bestehend aus einem Außengehäuse und einem Innengehäuse mit mehreren Gehäuseteilen, welche derart zusammengesetzt sind, dass ein von einem zu kühlenden Fluid durchströmter Fluidkanal im Innengehäuse und einem von einem Kühlfluid durchströmten Kühlkanal zwischen dem Innengehäuse und dem Außengehäuse gebildet sind, wobei mindestens eine von einer Kühlkanalfläche aus sich in den Fluidkanal erstreckende Wärmeleitrippe vorgesehen ist. Des Weiteren betrifft die Erfindung ein Verfahren zur Herstellung einer Wärmetauschervorrichtung, die aus einem Außengehäuse und einem Innengehäuse zusammengesetzt wird, wobei das Innengehäuse aus einem Innengehäuseteil und einem Deckelteil zusammengesetzt wird, derart, dass ein von einem zu kühlenden Fluid durchströmter Fluidkanal im Innengehäuse und ein von einem Kühlfluid durchströmter Kühlkanal zwischen dem Innengehäuse und dem Außengehäuse gebildet werden, wobei mindestens eine von einer Kühlkanalfläche aus sich in den Fluidkanal erstreckende Wärmeleitrippe vorgesehen wird.

Derartige Wärmtauscher werden in Verbrennungsmotoren beispielsweise als Ladeluftkühler oder Abgaskühler eingesetzt.

Bekannt sind in diesem Anwendungsbereich verschiedene Bauformen, insbesondere Rohrbündelwärmetauscher, Plattenwärmetauscher oder Druckgusswärmetauscher. Insbesondere bei Wärmetauschern, welche lediglich einen von einem zu kühlenden Fluid und einen vom Kühlfluid durchströmten Kanal aufweisen, ist es zur Erhöhung der Kühlleistung notwendig, den kühlfluidführenden Kanal möglichst nah an den Fluidkanal heranzuführen bzw. zusätzliche Wärmeübergangsflächen beispielsweise durch Wärmleitrippen zu schaffen. Durch das Hineinragen von derartigen Wärmeleitrippen in den vom zu kühlenden Fluid durchströmten Kanal wird zwar der Strömungswiderstand erhöht, jedoch die Kühlleistung in einem erheblichen Maße gesteigert.

Ein derartiger mit zwei durchströmten Kanälen ausgestatteter Druckgusswärmetauscher ist beispielsweise aus der DE 20 2006 009 464 U1 bekannt. Hierbei wird in ein äußeres, ein- oder mehrteiliges Gehäuseteil ein inneres Gehäuseteil angeordnet, dessen Außenwände den vom Kühlfluid durchströmten Kanal vom zu kühlenden fluiddurchströmten Kanal trennt. Zwischen dem Außengehäuse und dem Innengehäuse wird somit der vom Kühlfluid durchströmte Kanal gebildet. Von zumindest einer Gehäusefläche des Innengehäuses, welches als Trägerteil dient, erstrecken sich Wärmeleitrippen in den innenliegenden Fluidkanal. In den bekannten Ausführungen werden diese Rippen bei der Herstellung aus Druckguss mit dem Innengehäuseteil bzw. dem Trägerteil einstückig hergestellt. Insbesondere wird hier ein Aluminiumdruckguss verwendet, welcher den Vorteil eines geringen Gewichtes aufweist. Um eine derartige Wärmetauschervorrichtung kostengünstiger herzustellen, wobei diese auch noch ein geringeres Gewicht aufweisen soll, ist es aus der DE 10 2007 052 585 B3 bekannt, ein Trägerteil bereit zu stellen, das mit Öffnungen versehen ist, in die als Wärmeleitrippen dienende Stege gesteckt werden können und die nachfolgend stoffschlüssig mit dem Trägerteil verbunden werden können. Obwohl eine derartige Konstruktion ein weitaus geringeres Gewicht aufweist, ist der Herstellungsaufwand immer noch erheblich.

Es ist daher Aufgabe der Erfindung, eine Wärmetauschervorrichtung bereit zu stellen, die bei gleichbleibender oder verbesserter Kühlleistung im Vergleich zu den bekannten Wärmetauschervorrichtungen kostengünstiger herstellbar ist.

Diese Aufgabe wird dadurch gelöst, dass die Kühlkanalfläche mit der mindestens einen Wärmeleitrippe einstückig ausgeführt ist, wobei die mindestens eine Wärmeleitrippe einen Hohlkörper bildet. Dabei ist es für die Montage besonders vorteilhaft, wenn die Kühlkanalfläche als Deckelelement für ein Innengehäuseteil ausgeführt ist. Um eine schnelle Versottung der Wärmeleitrippen zu vermeiden, kann die Kühlkanalfläche eine Vielzahl von in Reihen angeordneten Wärmeleitrippen aufweisen. Um die Kühlwirkung zu erhöhen kann auch das Innengehäuseteil sich in Richtung des Deckelelementes erstreckende Wärmeleitrippen aufweisen. Eine besonders platzsparende Wärmetauschervorrichtung wird dann verschafft, wenn der Fluidkanal u-förmig ausgebildet ist. Besonders vorteilhaft wird die Wärmetauschervorrichtung als Abgaswärmetauscher verwendet, dessen Wärmeleitrippen in den abgasführenden Kanal ragen.

Auch wird die Aufgabe durch ein Verfahren zur Herstellung einer Wärmetauschervorrichtung gelöst, bei dem das Deckelteil mit der mindestens einen Wärmeleitrippe im Tiefziehverfahren hergestellt wird. Dabei kann das Deckelelement vorteilhaft durch ein Schweißverfahren, insbesondere Rührreibschweißen, mit dem Innengehäuseteil stoffschlüssig verbunden werden.

Ein Ausführungsbeispiel ist in der Zeichnung dargestellt und wird nachfolgend beschrieben.

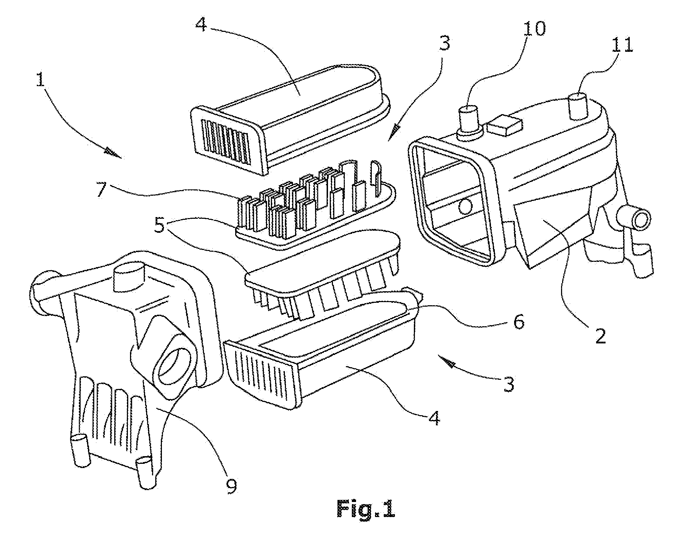

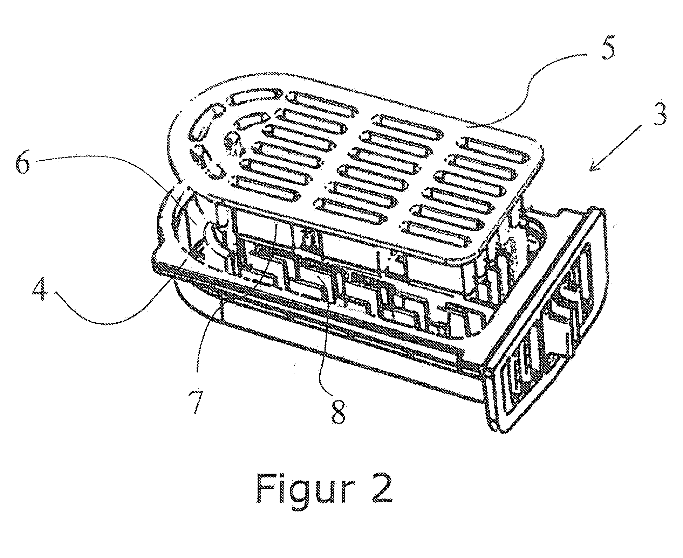

Figur 1 zeigt eine an sich bekannte Wärmetauschereinrichtung 1, die als sogenannter doppelt, u-förmig durchströmter Wärmetauscher ausgeführt ist. Ein ebenfalls an sich bekanntes Abgasventil 9 führt den Abgasstrom an der Wärmetauschervorrichtung 1 vorbei, um bei Bedarf heißes Abgas zur einer nicht dargestellten Brennkraftmaschine zurück zu führen oder leitet das Abgas durch die Wärmtauschereinrichtung, um es bei Bedarf gekühlt zur Brennkraftmaschine zurück zu führen. Der Aufbau und die Funktionsweise eines derartigen Abgaswärmetauschers ist ausführlich in der DE 20 2006 009 464 U1 beschrieben, die ausdrücklich zum Offenbarungsgehalt dieser Beschreibung gehört. Hierbei sollte es deutlich sein, dass hinsichtlich der Funktionsweise einer doppelt u-förmig durchströmten und einfach u-förmig durchströmten Wärmetauschervorrichtung keine Unterschiede bestehen. Ein Außengehäuse 2 umschließt im vorliegenden Beispiel zwei Innengehäuse 3, die möglichst vollumfänglich von Kühlmittel umspült werden. Dabei gelangt das Kühlmittel über einen Kühlmitteleinlass 10 in die Wärmetauschervorrichtung 1 und fließt über einen Kühlmittelauslass 11 aus dieser ab. Ein Innengehäuse 3 besteht aus zwei Gehäuseteilen 4, 5, (siehe insbesondere Figur 2) die im Druckgussverfahren hergestellt sind und dementsprechend gegossene Wärmeleitrippen 7, 8 aufweisen. Im unteren Innengehäuse 4 ist auch deutlich der Fluidkanal 6 zu erkennen, durch den dass zu kühlende Abgas strömt.
Figur 2 zeigt nun eine perspektivische Explosivansicht des erfindungsgemäßen Wärmetauschers 1 ohne Außengehäuse 2. Die Wärmetauschervorrichtung 1 besteht aus dem Außengehäuse 2 und dem Innengehäuse 3 mit im vorliegenden Fall zwei Gehäuseteilen 4, 5. Bei einer einfach betriebenen Wärmetauschervorrichtung beinhaltet das Außengehäuse lediglich ein Innengehäuse, bei einer doppelt betriebenen Wärmetauschervorrichtung beinhaltet das Außengehäuse 2 zwei Innengehäuse, die gemäß Figur 1 zueinander angeordnet sind. Das Gehäuseteil 4 wird als Innengehäuseteil bezeichnet und das Gehäuseteil 5 als Deckelteil für das Innengehäuseteil 4. Die vorliegende Wärmetauschervorrichtung dient als Wärmetauschervorrichtung für Abgas, sodass im Innengehäuse 3 ein u-förmiger Fluidkanal 6 der nachfolgend als Abgaskanal 6 bezeichnet wird ausgebildet ist. Im vorliegenden Fall ist das Deckelelement 5 mit Wärmeleitrippen 7 ausgeführt, wobei die Wärmeleitrippen 7 als Hohlkörper ausgeführt sind. In besonders vorteilhafter Weise ist dieses Deckelelement 5 als Tiefziehteil hergestellt. Dabei ist es vorstellbar, dass die Wärmeleitrippenreihen aus wenigen langgezogenen Wärmeleitrippen bestehen, was den Vorteil einer besseren Durchströmung bietet, oder eine Vielzahl von Wärmeleitrippen mit einer geringeren Breite, wodurch die Gefahr einer Versottung durch das durchgeführte Abgas der Wärmeleitrippen 7 reduziert wird. Zusätzlich können auch im Innengehäuseteil 4 sich in Richtung des Deckelelementes 5 erstreckende Wärmeleitrippen 8 angeordnet sein. In vorteilhafter Weise wird das Deckelelement durch ein Schweißverfahren, insbesondere Rührreibschweißverfahren mit dem Innengehäuseteil 4 stoffschlüssig verbunden. Auf bekannte Weise wird dann das Innengehäuse mit dem Außengehäuse verbunden.

## Patentansprüche

1. Wärmetauschervorrichtung bestehend aus einem Außengehäuse (1) und einem Innengehäuse (3) mit mehreren Gehäuseteilen (4, 5), welche derart zusammengesetzt sind, dass ein von einem zu kühlenden Fluid durchströmter Fluidkanal (6) im Innengehäuse (3) und ein von einem Kühlfluid durchströmter Kühlkanal zwischen dem Innengehäuse (3) und dem Außengehäuse (2) gebildet sind, wobei mindestens eine von einer Kühlkanalfläche (5) aus sich in den Fluidkanal (6) erstreckende Wärmeleitrippe vorgesehen ist, **dadurch gekennzeichnet, dass** die Kühlkanalfläche (5) mit der mindestens einen Wärmeleitrippe (7) einstückig ausgeführt ist, wobei die mindestens eine Wärmeleitrippe (7) einen Hohlkörper bildet.

2. Wärmetauschervorrichtung nach Anspruch 1, **dadurch gekennzeichnet, dass** die Kühlkanalfläche als Deckelelement für ein Innengehäuseteil ausgeführt ist.

3. Wärmetauschervorrichtung nach Anspruch 1 oder 2, **dadurch gekennzeichnet, dass** die Kühlkanalfläche (5) eine Vielzahl von in Reihen angeordneten Wärmeleitrippen (7) aufweist.

4. Wärmetauschervorrichtung nach einem der vorhergehenden Ansprüche, **dadurch gekennzeichnet, dass** die Kühlkanalfläche (5) als Deckelelement ausgeführt ist.

5. Wärmetauschervorrichtung nach Anspruch 4, **dadurch gekennzeichnet, dass** das Innengehäuseteil (4) sich in Richtung des Deckelementes (5) erstreckende Wärmeleitrippen (8) aufweist.

6. Wärmetauschervorrichtung nach einem der vorhergehenden Ansprüche, **dadurch gekennzeichnet, dass** der Fluidkanal (6) U-förmig ausgebildet ist.

7. Wärmetauschervorrichtung nach einem der vorhergehenden Ansprüche, **dadurch gekennzeichnet, dass** die Wärmetauschervorrichtung als Abgaswärmetauscher verwendet wird, dessen Wärmeleitrippen (7, 8) in den Abgas führenden Kanal (6) ragen.

8. Verfahren zur Herstellung einer Wärmetauschervorrichtung, die aus einem Außengehäuse und einem Innengehäuse zusammengesetzt wird, wobei das Innengehäuse aus einem Innengehäuseteil und einem Deckelteil zusammengesetzt wird, derart, dass ein von einem zu kühlenden Fluid durchströmter Fluidkanal im Innengehäuse und ein von einem Kühlfluid durchströmter Kühlkanal zwischen dem Innengehäuse und dem Außengehäuse gebildet werden, wobei mindestens eine von einer Kühlkanalfläche aus sich in den Fluidkanal erstreckende Wärmeleitrippe vorgesehen wird, **dadurch gekennzeichnet, dass** das das Deckelteil mit der mindestens einen Wärmeleitrippe im Tiefziehverfahren hergestellt wird.

9. Verfahren zur Herstellung einer Wärmetauschervorrichtung nach Anspruch 7, **dadurch gekennzeichnet, dass** das Deckelelement (5) durch ein Schweissverfahren, insbesondere Rührreibschweissen, mit dem Innengehäuseteil (4) stoffschlüssig verbunden wird.
